# EUROPÄISCHE PATENTSCHRIFT

(11) **EP 1 941 120 B1**
(45) Veröffentlichungstag und Bekanntmachung des Hinweises auf die Patenterteilung: **16.03.2016**
(21) Anmeldenummer: 06761661.5
(22) Anmeldetag: 14.06.2006
(51) Int. Cl.: H02P 3/12

(54) **ANTRIEB ZUM BETÄTIGEN EINES BEWEGLICHEN FLÜGELS, INSBESONDERE EINER TÜR**
DRIVE FOR ACTUATING A MOVING WING, PARTICULARLY A DOOR
MECANISME D'ENTRAINEMENT DESTINE A ACTIONNER UN BATTANT MOBILE, EN PARTICULIER UNE PORTE

(30) Priorität: 16.06.2005 DE 102005028057
(43) Veröffentlichungstag der Anmeldung: 09.07.2008
(73) Patentinhaber: GEZE GmbH, 71229 Leonberg (DE)
(72) Erfinder: HUCKER, Matthias, 76359 Marxzell (DE); KATZ, Eugen, 71339 Ehningen (DE); UWE, Horz, 71229 Leonberg (DE)
(86) Internationale Anmeldenummer: PCT/DE2006/001029
(87) Internationale Veröffentlichungsnummer: WO 2006/133689

(56) Entgegenhaltungen:
- EP-A- 0 562 153
- WO-A-02/37662
- DE-A1- 2 923 025
- DE-A1- 4 100 335
- DE-A1- 19 515 335

## Beschreibung

Die Erfindung betrifft einen Antrieb zum Betätigen eines beweglichen Flügels, insbesondere einer Tür nach dem Oberbegriff des Patentanspruchs 1.

Aus der EP 0 562 153 A1 ist ein Antrieb zum Betätigen eines beweglichen Flügels einer Tür nach dem Oberbegriff des Patentanspruchs 1 bekannt. Der Antrieb weist einen Elektromotor auf, dessen Abtriebsglied über eine Kraftübertragungseinrichtung mit dem Flügel in Wirkverbindung steht, so dass eine Bewegung des Abtriebsglieds eine Bewegung des Flügels bewirkt. Die Bewegung des Flügels ist durch eine Bremseinrichtung bremsbar, indem der Elektromotor als Generator betreibbar ist. Die Ausgangsspannung des generatorisch betriebenen Elektromotors wird an eine in einem Bremsstromkreis angeordnete, elektrische Widerstandseinrichtung angelegt, wobei die Bremskraft der Bremseinrichtung veränderbar ist, indem der elektrische Widerstand der Widerstandseinrichtung variierbar ist. Die Widerstandseinrichtung ist in herkömmlicher Weise durch ohmsche Widerstände und Potentiometer gebildet. Potentiometer sind gegenüber Verschmutzung und Verschleiß anfällig, so dass ein störungsfreier Betrieb der Bremseinrichtung nicht unter allen Umständen gewährleistet ist.

Aus der DE 41 00 335 A1 ist ein weiterer Antrieb zum Betätigen eines beweglichen Schwenkflügels einer Tür bekannt. Das Abtriebsglied eines Elektromotors steht über eine Kraftübertragungseinrichtung mit dem Flügel in Wirkverbindung, so dass eine Bewegung des Abtriebsglieds eine Bewegung des Flügels bewirkt. Eine mechanische Federeinrichtung stellt die Schließung des Flügels bei Ausfall der elektrischen Energieversorgung sicher. Um in diesem Falle ein gedämpftes Schließen des Flügels zu gewährleisten, ist eine Bremseinrichtung vorgesehen, indem der Elektromotor als Generator betreibbar ist. Die Ausgangsspannung des generatorisch betriebenen Elektromotors wird an eine in einem Bremsstromkreis angeordnete, elektrische Widerstandseinrichtung angelegt. Im Ausführungsbeispiel der genannten Druckschrift wird der Elektromotor hierzu kurzgeschlossen, so dass die Ausgangsspannung des generatorisch betriebenen Elektromotors an einem niedrigen ohmschen Widerstand anliegt. Da dieser Widerstandswert konstant ist, ist keine Veränderung der Bremsstärke möglich. Die Bremsstärke lässt sich also nicht an den konkreten Anwendungsfall, insbesondere an die Parameter des angeschlossenen Flügels, beispielsweise an das Gewicht des Flügels oder die gewünschte Schließgeschwindigkeit, sowie an die augenblickliche Stellung des Flügels anpassen.

Aus der DE 29 23 025 A1 ist eine Schaltungsanordnung zur Steuerung einer selbsterregten Widerstandsbremse einer elektrischen Maschine bekannt, wobei in dem Bremsstromkreis Dioden verwendet werden.

Die DE 195 15 335 A1 zeigt eine Bremseinrichtung für einen Reihenschluss-Kommutatormotor, in welcher ein Feldeffekttransistor Verwendung findet, jedoch in einer sehr aufwändigen Beschaltung.

Aus der WO 02 / 37 662 A1 ist eine Schaltungsanordnung eines zwei Anschlüsse aufweisenden Elektromotors bekannt, welche der Einstellung der Drehrichtung des Elektromotors dient.

Der Erfindung liegt die Aufgabe zugrunde, einen gattungsgemäßen Antrieb so weiterzuentwickeln, dass er eine an die Parameter des angeschlossenen Flügels anpassbare, sowie betriebssichere Bremseinrichtung aufweist.

Die Aufgabe wird durch die Merkmale des Patentanspruchs 1 gelöst. Die Unteransprüche bilden vorteilhafte Ausgestaltungsmöglichkeiten der Erfindung.

Die Bremsschaltung hat den deutlichen Vorteil, dass die generatorische Bremsung an die Parameter des angeschlossenen Flügels anpassbar ist, indem der elektrische Widerstand der Widerstandseinrichtung abhängig von den Parametern des Flügels einstellbar und/oder abhängig von Betriebszuständen oder Positionen des Flügels umschaltbar ist.

Erfindungsgemäß weist die Widerstandseinrichtung mindestens einen Feldeffekttransistor auf, wobei die Drain-Source-Strecke des Feldeffekttransistors in dem Bremsstromkreis angeordnet ist. Parallel zu der Drain-Source-Strecke des Feldeffekttransistors ist ein Spannungsteiler angeordnet, wobei der Mittenabgriff des Spannungsteilers mit dem Gate-Anschluss des Feldeffekttransistors verbunden ist. Die Gate-Source-Spannung des Feldeffekttransistors ist von den Größen der Widerstände des Spannungsteilers abhängig. Durch eine Schaltereinrichtung ist das von den Größen der Widerstände des Spannungsteilers abhängige Spannungsverhältnis veränderbar, wodurch der elektrische Gesamtwiderstand des Bremsstromkreises variierbar ist.

In dem Bremsstromkreis kann in Reihenschaltung mit der Drain-Source-Strecke des Feldeffekttransistors eine Diode angeordnet werden. Diese bewirkt, dass der Bremsstromkreis bei einer Umpolung der an ihm anliegenden Spannung einen hohen elektrischen Widerstand aufweist und die Bremswirkung der Bremseinrichtung entsprechend gering ist.

Um die Bremseinrichtung auch in der umgekehrten Drehrichtung des Elektromotors wirksam zu schalten, kann in dem Bremsstromkreis eine Umschaltereinrichtung zur Umkehrung der Stromrichtung angeordnet sein.

Außerdem kann in dem Bremsstromkreis eine Umschaltereinrichtung zur Zu- und Abschaltung der Widerstandseinrichtung angeordnet werden, um den Bremsstromkreis in bestimmten Betriebszuständen elektrisch von dem Elektromotor zu entkoppeln.

Im Nachfolgenden wird ein Ausführungsbeispiel in der Zeichnung anhand der Figuren näher erläutert.

Dabei zeigen:
- **Fig. 1**: eine erfindungsgemäße Bremsschaltung für den Elektromotor in einem ersten Betriebszustand des Antriebs;
- **Fig. 2**: die Bremsschaltung gemäß Fig. 1 in einem zweiten Betriebszustand des Antriebs;
- **Fig. 3**: die Bremsschaltung gemäß Fig. 1 in einem dritten Betriebszustand des Antriebs;
- **Fig. 4**: die Bremsschaltung gemäß Fig. 1 in einem vierten Betriebszustand des Antriebs;
- **Fig. 5**: die Bremsschaltung gemäß Fig. 1 in einem fünften Betriebszustand des Antriebs;
- **Fig. 6**: die Bremsschaltung gemäß Fig. 1 in einem sechsten Betriebszustand des Antriebs;
- **Fig. 7**: die Bremsschaltung gemäß Fig. 1 in einem siebten Betriebszustand des Antriebs;
- **Fig. 8**: eine weitere erfindungsgemäße, gegenüber den Fig. 1 bis 7 abgewandelte Bremsschaltung für den Elektromotor in einem ersten Betriebszustand des Antriebs;
- **Fig. 9**: die Bremsschaltung gemäß Fig. 8 in einem zweiten Betriebszustand des Antriebs;
- **Fig. 10**: die Bremsschaltung gemäß Fig. 8 in einem dritten Betriebszustand des Antriebs;
- **Fig. 11**: die Bremsschaltung gemäß Fig. 8 in einem vierten Betriebszustand des Antriebs;
- **Fig. 12**: die Bremsschaltung gemäß Fig. 8 in einem fünften Betriebszustand des Antriebs.

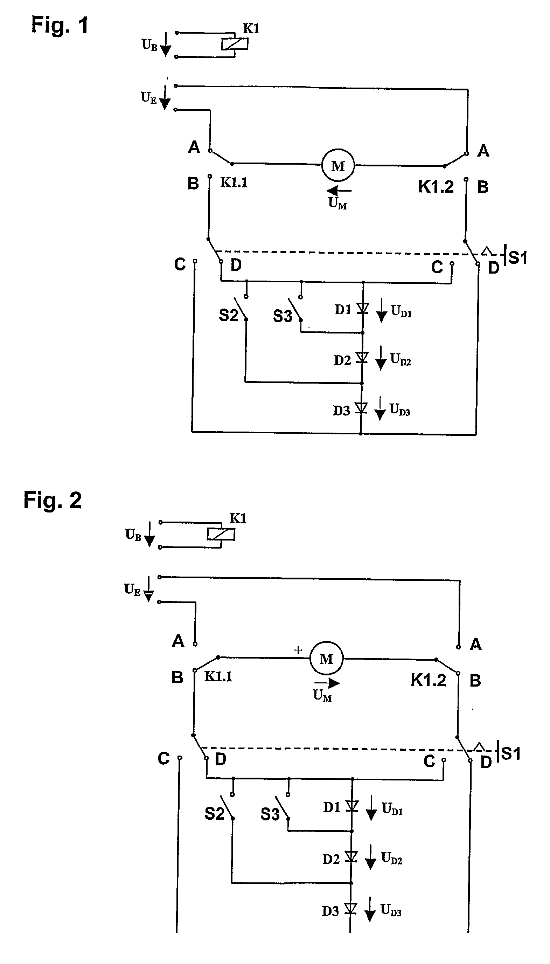

**Fig. 1** zeigt eine Bremsschaltung für einen generatorisch betreibbaren Elektromotor M in einem ersten Betriebszustand. Der als Gleichstrommotor ausgebildete Elektromotor M ist Bestandteil eines - hier nicht dargestellten - Antriebs zum Betätigen eines beweglichen Türflügels. Der Antrieb kann in herkömmlicher Weise - wie beispielsweise im nächstliegenden Stand der Technik, d.h. in der DE 41 00 335 A1 beschrieben - ausgebildet sein, d.h. das Abtriebsglied des Elektromotors M kann über eine Getriebeeinrichtung sowie über eine Kraftübertragungseinrichtung mit dem Türflügel in Wirkverbindung stehen, so dass eine Bewegung des Abtriebsglieds eine Bewegung des Türflügels bewirkt. Der Türflügel wird in einer seiner Bewegungsrichtungen elektromotorisch angetrieben. Als Hilfsantrieb für die zweite Bewegungsrichtung kann ein mechanischer Kraftspeicher, beispielsweise eine Feder oder ein Gummizug, vorgesehen sein. Alternativ kann eine elektromotorisch betätigte Türflügelbewegung in beiden Richtungen vorgesehen sein, wobei der Hilfsantrieb bei Ausfall der elektrischen Energieversorgung wirksam wird oder in einer Bewegungsrichtung unterstützend wirkt. Ohne zusätzliche Maßnahmen würde die durch den Hilfsantrieb bewirkte Flügelbewegung ungeregelt erfolgen, insbesondere ungedämpft. Die nachstehend beschriebene Bremsschaltung bewirkt eine Regelung der durch den Hilfsantrieb bewirkten Flügelbewegung.

Eine von einer hier nicht dargestellten Steuerungseinrichtung des Antriebs bereitgestellte Eingangsspannung U_{E} wird dem Elektromotor M über die sich in einer ersten Schaltstellung A befindenden Relaiskontakte K1.1, K1.2 eines als Umschalter ausgebildeten Relais K1 zugeführt, so dass sich der Elektromotor M abhängig von der Eingangsspannung U_{E} dreht. An der Schaltspule des Relais K1 liegt in diesem Betriebszustand die Betriebsspannung U_{B}.

Der Bremsstromkreis der Bremsschaltung ist in diesem Betriebszustand aufgrund der Schaltstellung A der Relaiskontakte K1.1, K1.2 elektrisch von dem Elektromotor M entkoppelt und somit unwirksam.

In **Fig. 2** ist die Bremsschaltung in einem zweiten Betriebszustand des Antriebs dargestellt. Die Betriebsspannung U_{B} ist in diesem Betriebszustand, welcher beispielsweise nach dem vollständigen Öffnen des an den Antrieb angeschlossenen Türflügels vorliegt, auf Null geschaltet, so dass das Relais K1 umgeschaltet ist und die Relaiskontakte K1.1, K1.2 die Schaltstellung B eingenommen haben. Der Bremsstromkreis der Bremsschaltung ist somit mit dem Elektromotor M elektrisch verbunden.

Im Bremsstromkreis sind in Reihenschaltung drei Dioden D1, D2, D3 angeordnet, wobei parallel zu einer Diode D1 ein Schalter S3 angeordnet ist (in der Zeichnung in geöffneter Stellung dargestellt). Bei geschlossenem Schalter S3 ist die Diode D1 somit überbrückt, und in dem Bremsstromkreis sind nur noch die beiden anderen Dioden D2, D3 wirksam. Parallel zu der aus der ersten Diode D1 und der benachbarten Diode D2 gebildeten Reihenschaltung ist ein weiterer Schalter S2 angeordnet, mit welchem diese beiden Dioden D1, D2 überbrückbar sind (in der Zeichnung in geöffneter Stellung dargestellt). Bei geschlossenem Schalter S2 ist somit in dem Bremsstromkreis nur noch die dritte, in der Zeichnung untere Diode D3 wirksam.

Der elektrische Widerstand der Dioden D1, D2, D3 ist von deren Durchlassspannungen abhängig, indem die Dioden D1, D2, D3 bei einer in Durchlassrichtung anliegenden Spannung oberhalb der Durchlassspannung einen niedrigen elektrischen Widerstand und bei einer anliegenden Spannung unterhalb der Durchlassspannung sowie bei in Sperrrichtung anliegender Spannung einen hohen elektrischen Widerstand aufweisen.

Dies bedeutet konkret für die Anwendung der Dioden D1, D2, D3 in dem Bremsstromkreis, dass bei niedrigen Drehzahlen des generatorisch betriebenen Elektromotors M dessen induzierte Spannung UM ebenfalls niedrig ist und bei steigender Drehzahl entlang der Kennlinie des Elektromotors M ansteigt. Erreicht die induzierte Spannung UM die Durchlassspannung der Reihenschaltung der Dioden D1, D2, D3 der Bremsschaltung, werden diese niederohmig, so dass eine Bremswirkung für den generatorisch betriebenen Elektromotor M eintritt und eine weitere Drehzahlerhöhung des Elektromotors M verhindert wird. In dem dargestellten Betriebszustand sind beide Schalter S2, S3 geöffnet, so dass alle drei Dioden D1, D2, D3 in dem Bremsstromkreis wirksam sind. Die vom Elektromotor M induzierte Spannung UM entspricht also der Summe der an den drei Dioden D1, D2, D3 anliegenden Spannungen U_{D1} + U_{D2} + U_{D3}. Sobald also die vom Elektromotor M induzierte Spannung U_{M} die dreifache Durchlassspannung der Dioden D1, D2, D3 übersteigt, tritt eine Bremswirkung der Bremsschaltung ein.

Durch das wahlweise Überbrücken einer oder mehrerer Dioden D1, D2 mittels der Schalter S2, S3 wird somit die Gesamtdurchlassspannung, also der Spannungswert, ab welchem der Bremsstromkreis niederohmig wird, variiert. Hiermit lässt sich die Drehzahl des Elektromotors M, ab welcher die Bremswirkung eintritt, einstellen.

Die Betätigung der Schalter S2, S3 kann auf verschiedene Weise erfolgen: Es ist denkbar, dass die Schalter S2, S3 manuell einstellbar sind, beispielsweise bei der Konfiguration des Antriebs bei dessen Installation. Alternativ oder zusätzlich kann vorgesehen sein, dass mindestens einer der Schalter S2, S3 flügelstellungsabhängig betätigbar ist, um eine von der Flügelstellung abhängige, automatische Umschaltung der Bremswirkung der Bremsschaltung zu erzielen.

Das dargestellte Ausführungsbeispiel stellt nur eine mögliche Ausgestaltung einer eine Reihenschaltung von Dioden aufweisenden Bremsschaltung dar, selbstverständlich kann eine nach dem dargestellten Prinzip funktionierende Bremsschaltung bei Bedarf auch mit nur zwei Dioden oder mit mehr als drei Dioden realisiert werden.

Da die Dioden D1, D2, D3 nur bei einer Polarität der anliegenden Spannung UM bei Erreichen der Durchlassspannung niederohmig werden, bei entgegengesetzt gepolter Spannung UM jedoch sperrend wirken, würde die Bremswirkung ohne weitere Maßnahmen nur bei einer Drehrichtung des Elektromotors M auftreten.

Um auch für die entgegengesetzte Drehrichtung des Elektromotors M eine Bremswirkung erzielen zu können, ist in dem Bremsstromkreis eine Umpoleinrichtung mit einem zweipoligen Schalter S1 vorgesehen. Im dargestellten Betriebszustand befinden sich die Schaltkontakte des Schalters S1 in der Schaltstellung D. Bei der dargestellten Polarität der durch den generatorisch betriebenen Elektromotor M induzierten Spannung U_{M} tritt die vorangehend ausführlich beschriebene Bremswirkung der Bremsschaltung auf.

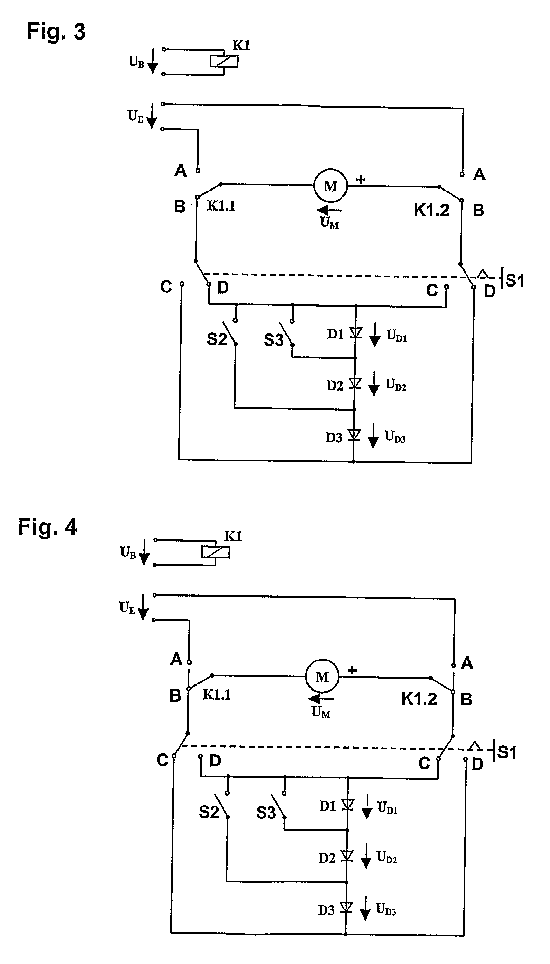

In dem in der **Fig. 3** dargestellten Betriebszustand des Antriebs wird der Elektromotor M in entgegengesetzter Drehrichtung generatorisch betrieben und induziert infolgedessen eine Spannung U_{M} mit umgekehrter Polarität. Da sich die Schaltkontakte des Schalters S1 unverändert in der Schaltstellung D befinden, übt die Bremsschaltung auch bei hoher Drehzahl des Elektromotors M keine Bremswirkung auf den Elektromotor M aus. Dies kann beispielsweise bei Feuerschutztüren zweckmäßig sein, welche mittels eines mechanischen Kraftspeichers in ihre Schließrichtung angetrieben und in der Schließlage beaufschlagt werden. Wird der Türflügel vorübergehend manuell geöffnet, so übt die Bremsschaltung bei der Öffnungsbewegung, welche gegen die Kraft des mechanischen Kraftspeichers erfolgt, keine zusätzliche Bremswirkung auf diese Öffnungsbewegung aus. Nach Loslassen des Türflügels wird dieser, durch den mechanischen Kraftspeicher angetrieben, in Schließrichtung bewegt, womit dann wieder der in Fig. 2 dargestellte Betriebszustand mit wirksamer Bremsschaltung vorliegt.

In dem in der **Fig. 4** dargestellten Betriebszustand entspricht die Drehrichtung des generatorisch angetriebenen Elektromotors M und somit die von diesem induzierte Spannung UM derjenigen des vorangehend in Fig. 3 beschriebenen Ausführungsbeispiels. Abweichend hiervon befinden sich die Schaltkontakte des Schalters S1 nun in der anderen Schaltstellung C, wodurch für diese entgegengesetzte Drehrichtung des Elektromotors M eine Bremswirkung der Bremsschaltung vorliegt, wie sie für den Betriebszustand in Fig. 2 bereits beschrieben wurde.

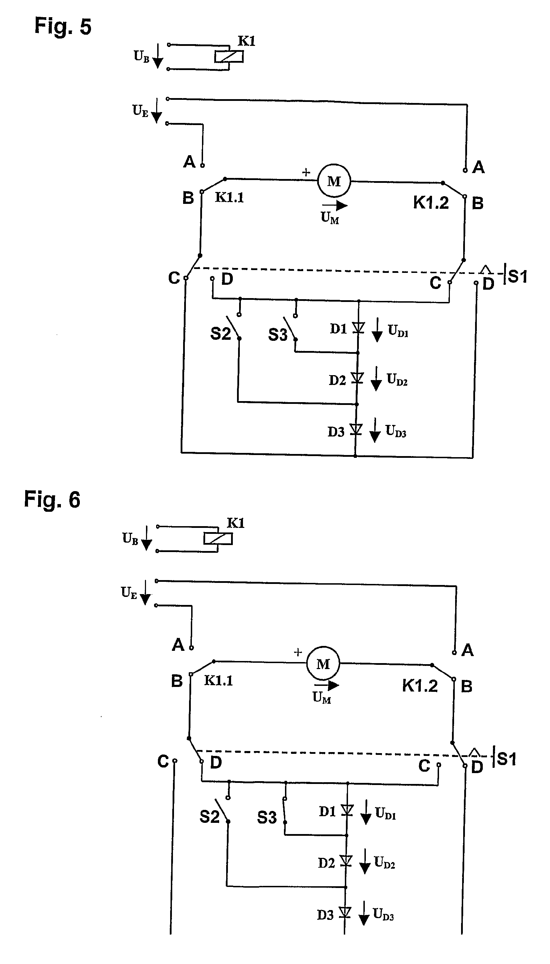

Wird, wie es bei dem in **Fig. 5** dargestellten Betriebszustand vorliegt, bei der Schaltstellung C der Schaltkontakte der Schalters S1 die Drehrichtung des Elektromotors M gegenüber dem vorangehend in Fig. 4 dargestellten Betriebszustand umgekehrt, übt die Bremsschaltung keine Bremswirkung auf den Elektromotor M aus.

Bei dem in **Fig. 6** beschriebenen Betriebszustand des Antriebs entsprechen die Drehrichtung des generatorisch betriebenen Elektromotors M sowie die Stellung des Schalters S1 der Umschalteinrichtung denjenigen des in der Fig. 2 beschriebenen Betriebszustands. Abweichend hiervon ist der die in der Zeichnung obere Diode D1 überbrückende Schalter S3 geschlossen, so dass nur die beiden anderen Dioden D2, D3 im Bremsstromkreis wirksam sind. Die vom Elektromotor M induzierte Spannung UM entspricht also der Summe der an diesen beiden Dioden D2, D3 anliegenden Spannungen U_{D2} + U_{D3}, während die an der in der Zeichnung oberen Diode D1 anliegende Spannung U_{D1} gleich Null ist. Sobald also die vom Elektromotor M induzierte Spannung U_{M} die zweifache Durchlassspannung der Reihenschaltung der beiden in der Zeichnung unteren Dioden D2, D3 übersteigt, tritt eine Bremswirkung der Bremsschaltung ein. Die entsprechende Drehzahl des Elektromotors M ist also niedriger als jene bei drei wirksamen Dioden D1, D2, D3.

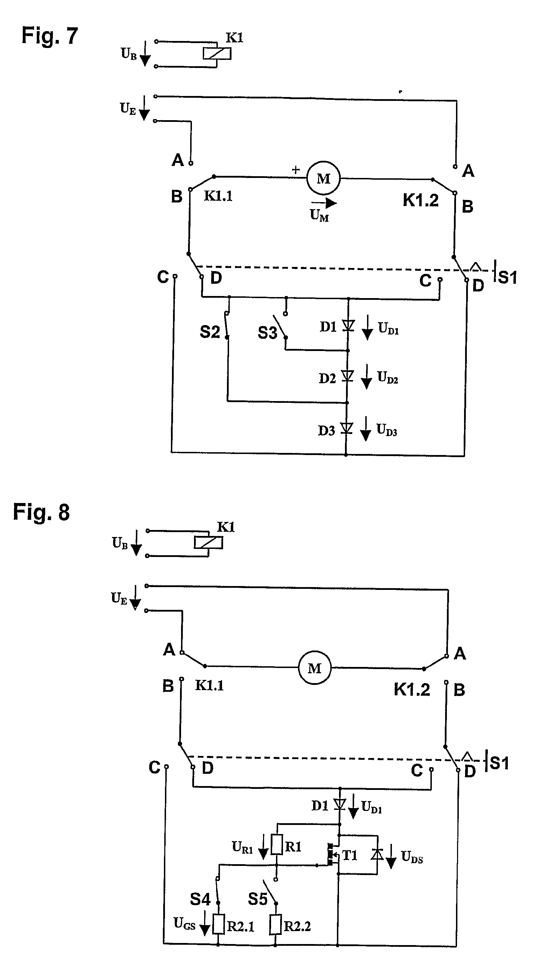

Bei dem in **Fig. 7** beschriebenen Betriebszustand ist, bei gegenüber dem in Fig. 6 dargestellten Betriebszustand unveränderter Drehrichtung des generatorisch betriebenen Elektromotors M sowie Stellung des Schalters S1 der Umschalteinrichtung, der die in der Zeichnung oberen beiden Dioden D1, D2 überbrückende Schalter 2 geschlossen, so dass nur die dritte, in der Zeichnung untere Diode D3 im Bremsstromkreis wirksam ist. Die vom Elektromotor M induzierte Spannung UM entspricht also der an dieser Diode D3 anliegenden Spannung U_{D3}, während die an den beiden in der Zeichnung oberen Dioden D1, D2 anliegende Spannung U_{D1} + U_{D2} gleich Null ist. Sobald die vom Elektromotor M induzierte Spannung UM die Durchlassspannung der in der Zeichnung unteren Diode D3 übersteigt, tritt eine Bremswirkung der Bremsschaltung ein. Die entsprechende Drehzahl des Elektromotors M ist also niedriger als jene bei zwei oder drei wirksamen Dioden D1, D2, D3.

In der **Fig. 8** ist eine weitere, gegenüber den Ausführungsbeispielen in den Fig. 1 bis 7 abgewandelte Bremsschaltung für den Elektromotor dargestellt.

Die Anordnung und die Funktion des als Umschalter ausgebildeten Relais K1 entsprechen den bereits beschrieben Ausführungsbeispielen, so dass sich der Elektromotor M abhängig von der Eingangsspannung U_{E} dreht. An der Schaltspule des Relais K1 liegt in diesem ersten Betriebszustand die Betriebsspannung U_{B}.

Der Bremsstromkreis der Bremsschaltung ist in diesem Betriebszustand aufgrund der Schaltstellung A der Relaiskontakte K1.1, K1.2 elektrisch von dem Elektromotor M entkoppelt und somit unwirksam.

Im Bremsstromkreis sind in Reihenschaltung eine Diode D1 sowie die Drain-Source-Strecke eines Feldeffekttransistors T1 angeordnet. Der Feldeffekttransistors T1 ist als selbstsperrender n-Kanal-Mosfet ausgebildet und arbeitet in der beschriebenen Bremsschaltung als spannungsabhängiger Lastwiderstand. Die Diode D1 bewirkt, dass der Bremsstromkreis nur in einer Stromrichtung wirksam ist.

Parallel zu der Drain-Source-Strecke des Feldeffekttransistors T1 ist ein aus den Widerständen R1 sowie einer Parallelschaltung der Widerstände R2.1 und R2.2 gebildeter Spannungsteiler angeordnet, wobei der Mittenabgriff des Spannungsteilers mit dem Gate-Anschluss des Feldeffekttransistors T1 verbunden ist. Die Widerstände R1, R2.1, R2.2 des Spannungsteilers sind hochohmig, d.h. der Stromfluss durch diese Widerstände R1, R2.1, R2.2 ist bei der niedrigen induzierten Spannung des in bestimmten Betriebszuständen generatorisch betriebenen Elektromotors gering.

In Reihe zu den beiden in der Zeichnung unteren, parallel geschalteten Widerständen R2.1, R2.2 ist jeweils ein Schalter S2.1, S2.2 angeordnet. Wahlweise lässt sich jeweils einer der Widerstände R2.1, R2.2, welche unterschiedliche Widerstandswerte aufweisen, in den Spannungsteiler einschalten, d.h. wenn der in der Zeichnung linke Schalter S2.1 geschlossen ist, besteht der Spannungsteiler aus den Widerständen R1 und R2.1, und bei geschlossenem, in der Zeichnung rechten Schalter S2.2 wird der Spannungsteiler aus den Widerständen R1 und R2.2 gebildet. Sind beide Schalter geschlossen, besteht der Spannungsteiler aus dem Widerstand R1 sowie der Parallelschaltung der Widerstände R2.1 und R2.2.

Das dargestellte Ausführungsbeispiel stellt nur eine mögliche Ausgestaltung einer eine Parallelschaltung eines Spannungsteilers mit der Drain-Source-Strecke eines Feldeffekttransistors aufweisenden Bremsschaltung dar. Selbstverständlich kann eine nach dem dargestellten Prinzip funktionierende Bremsschaltung bei Bedarf auch mit mehr als zwei umschaltbaren Widerständen realisiert werden.

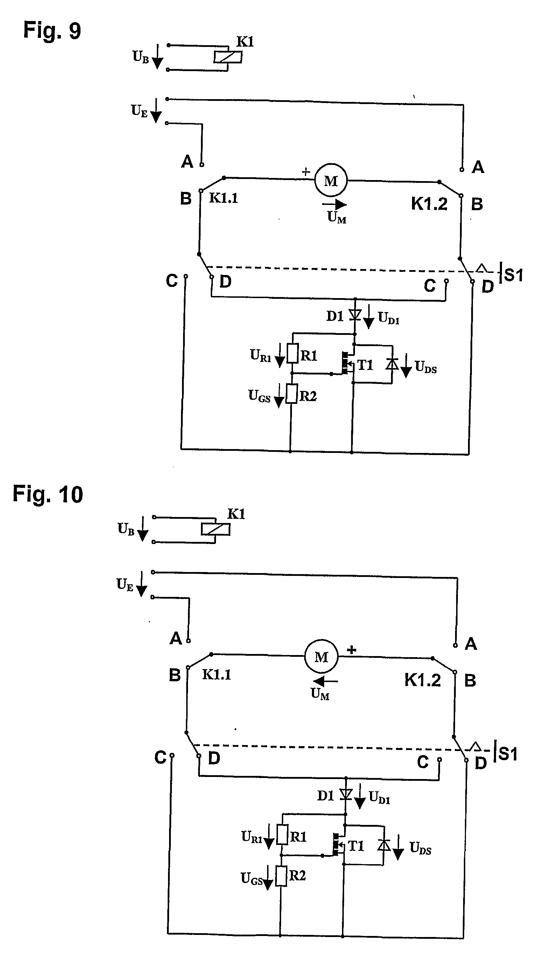

Die **Fig. 9** zeigt die Bremsschaltung gemäß des in Fig. 8 beschriebenen Ausführungsbeispiels in einem zweiten Betriebszustand. Die Betriebsspannung U_{B} ist in diesem Betriebszustand, welcher beispielsweise nach dem vollständigen Öffnen des an den Antrieb angeschlossenen Türflügels vorliegt, auf Null geschaltet, so dass das Relais K1 umgeschaltet ist und die Relaiskontakte K1.1, K1.2 die Schaltstellung B eingenommen haben. Der Bremsstromkreis der Bremsschaltung ist somit mit dem Elektromotor M elektrisch verbunden.

Der zu der Drain-Source-Strecke des Feldeffekttransistors T1 parallelgeschaltete Spannungsteiler ist zwar identisch aufgebaut, wie in Fig. 8 beschrieben, ist in Fig. 9 und den nachfolgenden Abbildungen jedoch vereinfacht dargestellt, indem die wahlweise zu- oder abschaltbaren Widerstände R2.1, R2.2 zu einem einzigen Widerstand R2 zusammengefasst wurden. Der Spannungsteiler wird somit aus zwei Widerständen R1, R2 gebildet. Die von dem generatorisch betriebenen Elektromotor M induzierte Spannung U_{M} liegt an den Elementen des Bremsstromkreises, d.h. an der Diode D1 sowie an den Widerständen R1, R2 des Spannungsteilers an. Die an dem in der Zeichnung unteren Widerstand R2 abfallende Spannung entspricht der Gate-Source-Spannung U_{GS} des Feldeffekttransistors T1.

Die Drain-Source-Strecke des Feldeffekttransistors T1 hat bei einer Gate-Source-Spannung U_{GS} unter 3V einen hohen elektrischen Widerstand. Die Drain-Source-Strecke geht, je nach Typ, ab einer Gate-Source-Spannung U_{GS} von etwa 3V in einen leitenden Zustand über, und der Feldeffekttransistor T1 verringert dann bei weiter ansteigender Gate-Source-Spannung U_{GS} seinen Drain-Source-Widerstand, bis seine Drain-Source-Strecke ab einer Gate-Source-Spannung U_{GS} von etwa 5V annähernd vollständig leitend ist. In diesem Zustand beträgt der Drain-Source-Widerstand des Feldeffekttransistors T1 typischerweise weniger als 0,1 Ω, so dass der im Bremsbetrieb generatorisch betriebene Elektromotor M dann mit dem größten Strom belastet wird und die Bremswirkung damit am größten ist.

Mit der beschrieben Bremsschaltung wird eine Regelung der Bremswirkung realisiert: Der Elektromotor M induziert eine von der Geschwindigkeit der Flügelbewegung abhängige Spannung UM. Bei einer kleinen induzierten Spannung U_{M} ist die Bremswirkung des Feldeffekttransistors T1 gering, da der elektrische Widerstand seiner Drain-Source-Strecke dann hoch ist. Durch den Hilfsantrieb kann der Flügel und damit auch das mit dem Flügel wirkverbundene Abtriebsglied des Elektromotors M beschleunigen, was eine Erhöhung der induzierten Spannung UM des Elektromotors M zur Folge hat. Die Erhöhung der induzierten Spannung U_{M} des Elektromotors M bewirkt aufgrund des durch die Widerstände R1, R2 gebildeten Spannungsteilers eine proportionale Erhöhung der Gate-Source-Spannung U_{GS} des Feldeffekttransistors T1. Hierdurch verringert sich der elektrische Widerstand der Drain-Source-Strecke des Feldeffekttransistors T1, so dass die Bremswirkung des Feldeffekttransistors T1 zunimmt und einer weiteren Beschleunigung des Flügels bzw. des Elektromotors M damit entgegenwirkt. Umgekehrt bewirkt eine langsamere Flügelbewegung eine geringere induzierte Spannung UM des Elektromotors M, welche wiederum über die geringere Gate-Source-Spannung den Widerstand der Drain-Source-Strecke des Feldeffekttransistors T1 erhöht, so dass sich die Bremswirkung verringert. Die Geschwindigkeit des durch den Hilfsantrieb angetriebenen Flügels wird somit auf einen von der Einstellung des Spannungsteilers abhängigen Wert eingeregelt.

In dem in der **Fig. 10** dargestellten Betriebszustand des Antriebs wird der Elektromotor M in entgegengesetzter Drehrichtung generatorisch betrieben und induziert infolgedessen eine Spannung UM mit umgekehrter Polarität. Da sich die Schaltkontakte des Schalters S1 unverändert in der Schaltstellung D befinden, übt die Bremsschaltung auch bei hoher Drehzahl des Elektromotors M keine Bremswirkung auf den Elektromotor M aus.

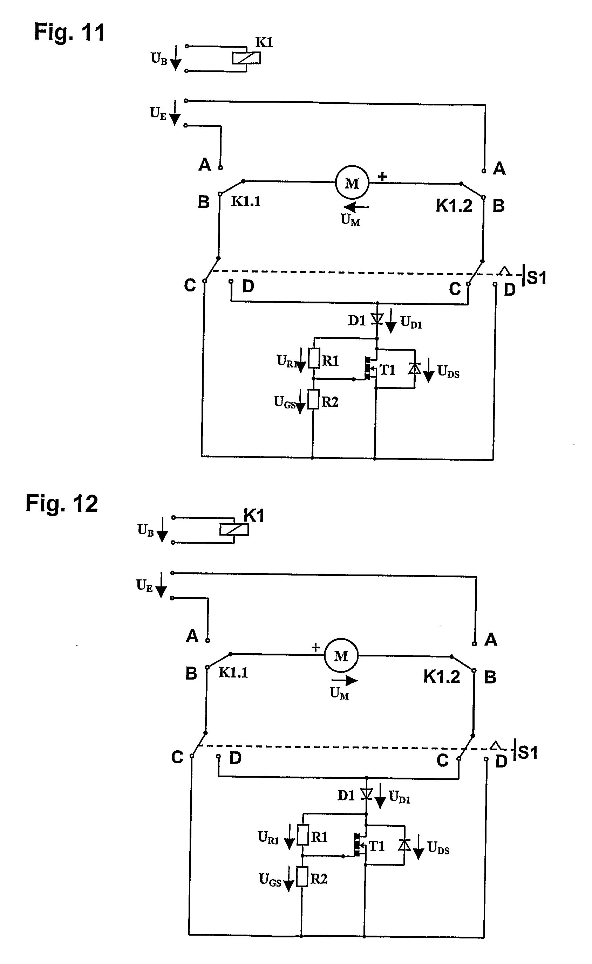

In dem in der **Fig. 11** dargestellten Betriebszustand entspricht die Drehrichtung des generatorisch angetriebenen Elektromotors M und somit die von diesem induzierte Spannung UM derjenigen des vorangehend in Fig. 10 beschriebenen Ausführungsbeispiels. Abweichend hiervon befinden sich die Schaltkontakte des Schalters S1 nun in der anderen Schaltstellung C, wodurch für diese entgegengesetzte Drehrichtung des Elektromotors M eine Bremswirkung der Bremsschaltung vorliegt, wie sie für den Betriebszustand in Fig. 9 bereits beschrieben wurde.

Wird, wie es bei dem in **Fig. 12** dargestellten Betriebszustand vorliegt, bei der Schaltstellung C der Schaltkontakte der Schalters S1 die Drehrichtung des Elektromotors M gegenüber dem vorangehend in Fig. 11 dargestellten Betriebszustand umgekehrt, übt die Bremsschaltung keine Bremswirkung auf den Elektromotor M aus.

### Liste der Referenzzeichen

- A: Schaltstellung
- B: Schaltstellung
- C: Schaltstellung
- D: Schaltstellung
- D1: Diode
- D2: Diode
- D3: Diode
- K1: Relais
- K1.1: Relaiskontakt
- K1.2: Relaiskontakt
- M: Elektromotor
- R1: Widerstand
- R2.1: Widerstand
- R2.2: Widerstand
- S1: Schalter
- S2: Schalter
- S3: Schalter
- S4: Schalter
- S5: Schalter
- T1: Feldeffekttransistor
- U_{B}: Betriebsspannung
- U_{D1}: Spannung
- U_{D2}: Spannung
- U_{D3}: Spannung
- U_{DS}: Drain-Source-Spannung
- U_{GS}: Gate-Source-Spannung
- U_{M}: Spannung
- U_{R1}: Spannung

## Patentansprüche

1. Antrieb zum Betätigen eines beweglichen Flügels, insbesondere einer Tür, mit einem Elektromotor (M), dessen Abtriebsglied über eine Kraftübertragungseinrichtung mit dem Flügel in Wirkverbindung steht, so dass eine Bewegung des Abtriebsglieds eine Bewegung des Flügels bewirkt, sowie mit einer Bremseinrichtung, durch welche die Bewegung des Flügels bremsbar ist, indem der Elektromotor (M) als Generator betreibbar ist,
wobei die Ausgangsspannung des generatorisch betriebenen Elektromotors (M) an eine in einem Bremsstromkreis angeordnete, elektrische Widerstandseinrichtung angelegt wird, und
wobei die Bremskraft der Bremseinrichtung veränderbar ist, indem der elektrische Widerstand der Widerstandseinrichtung variierbar ist,
**dadurch gekennzeichnet,**
**dass** die Widerstandseinrichtung mindestens einen Feldeffekttransistor (T1) aufweist,
wobei die Drain-Source-Strecke des Feldeffekttransistors (T1) in dem Bremsstromkreis angeordnet ist, und
wobei parallel zu der Drain-Source-Strecke des Feldeffekttransistors (T1) ein Spannungsteiler angeordnet ist, wobei der Mittenabgriff des Spannungsteilers mit dem Gate-Anschluss des Feldeffekttransistors (T1) verbunden ist, und
wobei, die Gate-Source-Spannung (U_{GS}) des Feldeffekttransistors (T1) von den Größen der Widerstände (R1, R2.1, R2.2) des Spannungsteilers abhängig ist, und
wobei das von den Größen der Widerstände (R1, R2.1, R2.2) des Spannungsteilers abhängige Spannungsverhältnis durch eine Schaltereinrichtung (S4, S5) veränderbar ist.

2. Antrieb nach Anspruch 1,
**dadurch gekennzeichnet, dass** in dem Bremsstromkreis eine Diode (D1) in Reihenschaltung mit der Drain-Source-Strecke des Feldeffekttransistors (T1) angeordnet ist.

3. Antrieb nach Anspruch 1,
**dadurch gekennzeichnet, dass** in dem Bremsstromkreis eine Umschaltereinrichtung (S1) zur Umkehrung der Stromrichtung angeordnet ist.

4. Antrieb nach Anspruch 1,
**dadurch gekennzeichnet, dass** in dem Bremsstromkreis eine Umschaltereinrichtung (K1, K1.1, K1.2) zur Zu- und Abschaltung der Widerstandseinrichtung angeordnet ist.

## Claims

1. Drive for actuating a movable leaf, more particularly of a door,
comprising an electric motor (M), the output element of which is operatively connected to the leaf via a force transmission device, such that a movement of the output element brings about a movement of the leaf, and
comprising a braking device, by which the movement of the leaf can be braked by virtue of the electric motor (M) being operable as a generator, wherein the output voltage of the electric motor (M) operated as a generator is applied to an electrical resistance device arranged in a braking circuit, and
wherein the braking force of the braking device is variable by virtue of the electrical resistance of the resistance device being variable,
**characterized in that** the resistance device has at least one field effect transistor (Tl),
wherein the drain-source path of the field effect transistor (Tl) is arranged in the braking circuit, and
wherein a voltage divider is arranged in parallel with the drain-source path of the field effect transistor (Tl), wherein the centre tab of the voltage divider is connected to the gate terminal of the field effect transistor (Tl), and
wherein the gate-source voltage (U_{GS}) of the field effect transistor (Tl) is dependent on the magnitudes of the resistances (R1, R2.1, R2.2) of the voltage divider, and
wherein the voltage ratio dependent on the magnitudes of the resistances (R1, R2.1, R2.2) of the voltage divider is variable by a switch device (S4, S5).

2. Drive according to Claim 1,
**characterized in that** in the braking circuit a diode (Dl) is arranged in a manner connected in series with the drain-source path of the field effect transistor (Tl).

3. Drive according to Claim 1,
**characterized in that** a changeover switch device (S1) for reversing the current direction is arranged in the braking circuit.

4. Drive according to Claim 1,
**characterized in that** a changeover switch device (K1, K1.1, K1.2) for switching the resistance device on and off is arranged in the braking circuit.

## Revendications

1. Dispositif d'entraînement destiné à actionner un battant mobile, notamment une porte, comportant un moteur électrique (M) dont l'organe entraîné est en liaison fonctionnelle avec le battant par l'intermédiaire d'un dispositif de transmission de force de manière à ce qu'un mouvement de l'organe entraîné provoque un mouvement du battant, et
un dispositif de freinage par l'intermédiaire duquel le mouvement du battant peut être freiné en faisant en sorte que le moteur électrique (M) puisse être mis en fonctionnement en tant que générateur,
dans lequel la tension de sortie du moteur électrique (M) entraîné en tant que générateur est appliquée à un dispositif à résistance électrique disposé dans un circuit de freinage, et
dans lequel la force de freinage du dispositif de freinage peut être modifiée en faisant en sorte que la résistance électrique du dispositif à résistance puisse être amenée à varier,
**caractérisé en ce**
**que** le dispositif à résistance comprend au moins un transistor à effet de champ (Tl),
dans lequel la section drain-source du transistor à effet de champ (Tl) est disposée dans le circuit de freinage, et
dans lequel un diviseur de tension est disposé en parallèle avec la section drain-source du transistor à effet de champ (T1), dans lequel la prise médiane du diviseur de tension est connectée à la borne de grille du transistor à effet de champ (T1), et
dans lequel la tension grille-source (U_{GS}) du transistor à effet de champ (T1) dépend des valeurs des résistances (R1, R2.1, R2.2) du diviseur de tension, et dans lequel le rapport de tension dépendant des valeurs des résistances (R1, R2.1, R2.2) du diviseur de tension peut être modifié par l'intermédiaire d'un dispositif de commutation (S4, S5).

2. Dispositif d'entraînement selon la revendication 1,
**caractérisé en ce qu'**une diode (Dl) est disposée dans le circuit de freinage de manière à être connectée en série à la section drain-source du transistor à effet de champ (Tl).

3. Dispositif d'entraînement selon la revendication 1,
**caractérisé en ce qu'**un dispositif inverseur (S1) destiné à inverser le sens du courant est disposé dans le circuit de freinage.

4. Dispositif d'entraînement selon la revendication 1,
**caractérisé en ce qu'**un dispositif inverseur (K1, K1.1, K1.2) destiné à activer et désactiver le dispositif à résistance est disposé dans le circuit de freinage.
